Europäisches Patentamt

European Patent Office

Office européen des brevets

(11) Publication number: **0 552 544 A1**

## EUROPEAN PATENT APPLICATION

(21) Application number: 92310994.6

(22) Date of filing: 02.12.92

(51) Int. Cl.5: **H04N 1/40**

(30) Priority: **23.12.91 CA 2058363**

(43) Date of publication of application:
**28.07.93 Bulletin 93/30**

(84) Designated Contracting States:
**DE FR GB**

(71) Applicant: **International Business Machines
Corporation
Old Orchard Road
Armonk, N.Y. 10504(US)**

(72) Inventor: **Labadie, Eric
191 St Georges Street, Apartment 506
Toronto, Ontario M5R 2M6(CA)**
Inventor: **Meadowcroft, Chris R.
14262 South East- 6th Street, Apt.T102
Bellevue, Washington 98007(US)**

(74) Representative: **Blakemore, Frederick Norman
IBM United Kingdom Limited Intellectual
Property Department Hursley Park
Winchester Hampshire SO21 2JN (GB)**

(54) **An improved method for decoding compressed images.**

(57) A method for decompressing and modifying the resolution of a compressed image wherein portions of the image are decompressed and modified prior to the decompression of other portions of the image. The invention is particularly useful for decompressing run end encoded image data and modifying the resolution of the decompressed data to match the resolution of an output device.

FIG. 1A

FIG. 1B

## Background of the Invention

### 1. Field of the Invention

The invention relates generally to the processing of compressed image data and more particularly to the decompression and modification of the compressed data for displaying or printing a representation of the image. In particular, the invention is concerned with improving the efficiency of the decompression and anti-aliasing or resolution modification processes applied to an image which has been compressed using an algorithm such as the IBM Modified Read (MMR) or Consultative Committee on International Telegraph and Telephone (CCITT) G4 compression algorithms.

### 2. Description of the Prior Art

U.S. Patent No. 5,029,107 discloses a method for producing a reduced resolution greyscale "preview" image that substantially depicts how the bit-mapped pattern would appear when printed at a high resolution.

U.S. Patent No. 4,628,534 describes a process for changing the resolution of an image stored in a compressed form without having to decompress the image. It does this by using a "cumulative fractional residue" factor that is adjusted in accordance with the pixel counts. The patent may only be useful for black and white images because it is difficult to have "cumulative fractional residue" factors for each colour code. The patent also describes a method for changing the vertical resolution of an image by eliminating or replicating compressed image data for certain scan lines which are selected based on the information content in the scan lines.

U.S. Patent No. 4,124,871 describes a process for changing the resolution of a black and white image while at the same time compressing the image. The process uses a border follower technique where the perimeter of areas of black are followed in a clockwise manner to define the image. The resolution is changed by use of a multiplying device.

U.S. Patent No. 4,792,981 describes a process for manipulating (including modifying the resolution) an image without having to decompress the run length encoded data representing the image.

U.S. Patent No. 4,742,553 describes a process for converting an input bit map to an output bit map of different resolution using an error term which averages the input pixel density with precision.

U.S. Patent No. 4,280,143 (IBM) describes another process for changing resolution of image without loss of information.

U.S. Patent No. 4,783,834 (IBM) transposes and optionally compresses a run end or run length form image to a series of horizontal stripes.

U.S. Patent No. 4,412,252 describes a process for image reduction by deleting portions of the image. It is useful where the image may contain inessential information.

U.S. Patent No. 4,712,140 (IBM) describes a process for reduction of a 6x6 image to a 5x5 image by transposition of the image.

U.S. Patent No. 4,791,680 describes an image data converter in which the compressed image can be decompressed and manipulated in parts. It seems to suggest that the operations may overlap but it is not clear that was intended.

U.S. Patent No. 4,872,064 describes a scheme for scaling or changing the resolution of an image.

U.S. Patent No. 4,823,286 describes a multi-channel pixel data path for communication between a host processor and an all-points addressable (APA) frame buffer which includes means for automatically rearranging the data path to allow operation on pixels, operation on pixel slices and operation on bit plates and includes means to extend the bit-bit operation to provide improved anti-aliasing text and graphics.

While the prior art describes many techniques for compressing/decompressing image data, modifying the resolution of the image produced from the data or using anti-aliasing algorithms to provide a smoother appearing rendition of the image, none of the art suggests that the processes of decompression and resolution modification or anti-aliasing be intertwined or performed simultaneously. In all of the prior art, the image data is either decompressed and then subjected to resolution modification or anti-aliasing or, in some cases, the image may be reduced before decompression. This latter approach is suggested in U.S. Patents 4,628,534 and 4,792,981.

### Objects of the Invention

It is a primary object of the present invention to increase the speed with which an image received in a compressed form can be decompressed and subjected to one resolution modification or anti-aliasing algorithm and then displayed, printed or otherwise observed in a modified or antialiased representation of that image.

The present invention may be applied to decompress and modify images compressed in accordance with the IBM MMR or CCITT G4 compression algorithms where the resolution of the image is reduced 2:1 and the image is decompressed one line at a time and each line is reduced before the next line is decompressed.

## Summary of the Invention

The present invention now provides a method for decompressing and modifying compressed data representing an image comprising the steps of: a) decompressing and modifying a predetermined portion of said compressed image data to form a first displayable portion of said data; and b) repeating said step a) with additional predetermined portions of said compressed image data to form additional displayable portions of said data whereby the combination of all said displayable portions provides a decompressed and modified displayable representation of said image.

## Brief Description of the Drawings

Figures 1A and 1B illustrate a flow diagram for decompressing a two colour image and modifying the resolution of the image by a ratio of 2:1.

Figure 2 illustrates, by means of a flow diagram, a process for decompressing and modifying run-length encoded data into grey image data.

## Description of the Preferred Embodiment

In processing image data, the image data is often compressed in accordance with the IBM standard MMR compression algorithm or the CCITT standard G4 algorithm. These algorithms generate Run End encoded compressed images. When decoding and displaying the image it is often necessary to reduce the image resolution to be compatible with the output device. For example, many images are encoded at a density of 200 pixels/inch which corresponds to the pixel density used in many output printers. However, display devices often display images at a density of 100 pixels/inch. Therefore, it is often necessary to reduce the resolution of the originally stored information to match the pixel density of the output device. This could be achieved by such simple means as ignoring every second pixel in the original data. However, such a fixed algorithm can often lead to a distorted image and, therefore, is not usually done. Rather, an algorithm is used to determine which pixels will be retained or changed and which will not be displayed. The present invention describes a process where the speed of selection or altering of pixels can be substantially increased. In the past, this process has been achieved in two successive steps. The compressed image is first decoded and then a resolution modifying (for bilevel images) or anti-aliasing (for grey level images) algorithm is applied to the decoded image. The present invention improves this process by performing the two procedures in parallel. A portion of the compressed image information is decoded and then the anti-aliasing/decoding algorithm is applied to the decoded information. This overlapping process is continued until all the image information is decompressed and reduced.

In general terms, the present invention processes the compressed two colour image data by first decompressing and modifying a first run end encoded line of the image, decompressing and modifying a second run end encoded line of the image, and further modifying said first and second lines by combining them to provide a single line of said image and continuing said steps of decompressing and combining pairs of lines until all said compressed image data has been decompressed and modified. For grey images the process of decompressing and modifying each pair of lines is performed as a single unitary operation. The invention, while described with particular reference to 2:1 resolution modification, could be used equally well with other resolutions such as 3:1, 4:1 or 8:1 if that was desirable.

There are normally two stages or procedures that have to be performed to decompress MMR or G4 encoded compressed data. First, the original two dimensional compressed data must be converted to a one dimensional run end compressed format. This is a partially compressed representation of the original encoded image. The following example represents a single line of the original encoded image:

```
24

00      00      00

00      05      07      12      19      20

20      20
```

In this example, the first two bytes indicate that the run length code is 24 bytes long. The third through eighth bytes identify the string as being run length encoded. Bytes nine and ten indicate the beginning of the encoded line and bytes eleven and twelve indicate that the beginning of the line to the end of the fifth pixel is black. Bytes thirteen and fourteen indicate that the line is white from the beginning of the sixth pixel to the end of the seventh pixel. Similarly, the line is black from the beginning of the eighth pixel to the end of the twelfth pixel, white from the beginning of the thirteenth pixel to the end of the nineteenth pixel and the twentieth pixel is black. In the prior art this run end encoded line would be decoded to the following:

```
1 1 1 1   1 0 0 1   1 1 1 1   0 0 0 0   0 0 0 1
```

If it was necessary to modify the resolution of the image, then the prior art would apply the necessary resolution as a second, separate, step. For example, if the line above was to have its resolution reduced 2:1, where the 1's or blacks take precedence, the resultant line of image for the above shown representation would be as follows:

```
1 1 1 1   1 0 0 1   1 1 1 1   0 0 0 0   0 0 0 1

\/  \/    \/  \/    \/  \/    \/  \/    \/  \/

1   1     1   1     1   1     0   0     0   1
```

The present invention enables the decoding and horizontal resolution of a two colour image to be achieved in a single process and the decoding and horizontal and vertical resolution or anti-aliasing of a grey image to be accomplished in a single step. As will be evident from the description, hereinafter, the performance of decompressing and resolution modification in a single process can substantially increase the speed with which run end encoded information can be converted to displayable form.

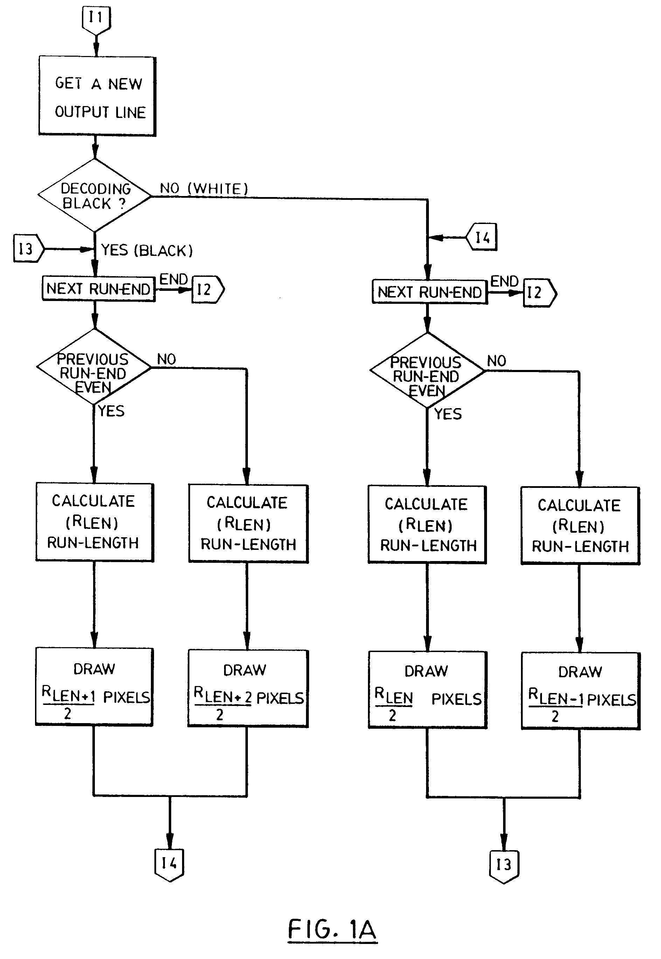

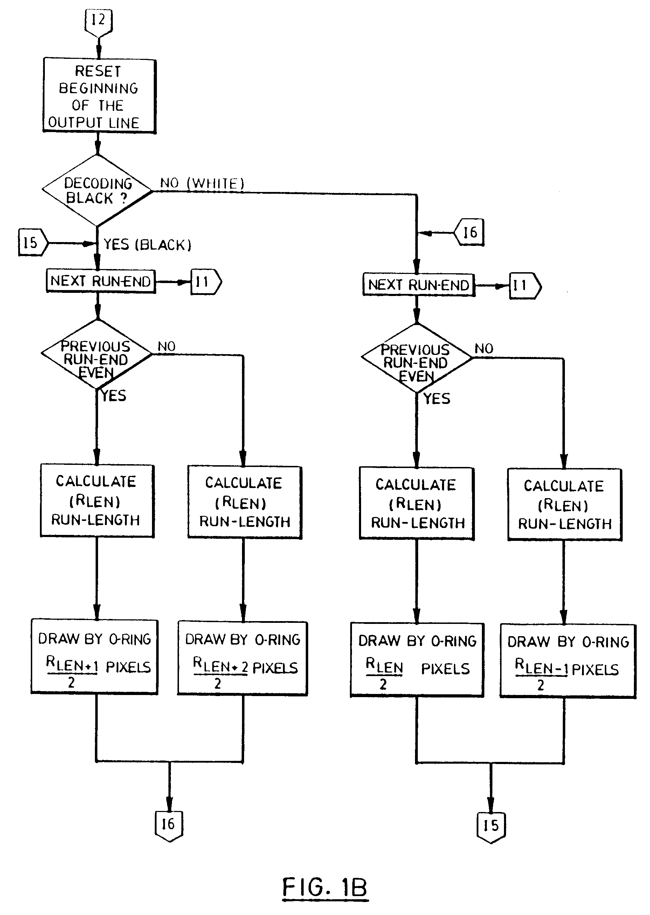

We will now describe our invention in relation to the flow diagram as shown in Figures 1A and 1B and with reference to the single line of run end encoded data shown hereinbefore.

As indicated at I1 on Figure 1A, a new output line is acquired. The first logic block determines whether white or black is being decoded first. The first part of the first line is white and the next run end in the line is detected. In this example, the next run end is 0. The previous run end is assumed even as the end of any previous run end is always even. The next step calculates the run length. In this example, the run length would be 0 - 0 equals 0. Next, the number of pixels to be drawn is calculated. In the example, the run length of 0 would be divided by 2 with a result of 0. No white pixels would be drawn. At point I3 the flow returns to find the next run end. In the example, the next run end is 5. As the previous run end was 0 or even, the run length of 5 - 0 = 5 is calculated and provided to the draw logic where

$$\frac{run\ length + 1}{2} = \frac{5 + 1}{2} = 3\ black\ pixels$$

I4 is now followed to find the next run end of 7. As the previous run end of 5 is odd the run length of 7 - 5 = 2 is calculated and fed to the draw logic

$$\frac{\text{run length} - 1}{2} = \frac{2 - 1}{2} = 0 \text{ white pixels}$$

I3 is then followed to find the next run end 12. The previous odd run length of 7 is subtracted from 12 to provide an output of 5 to the draw logic box

$$\frac{\text{run length} + 1}{2} = \frac{5 + 1}{2} = 3 \text{ more black pixels}$$

The flow then follows I4 to find the next run end which is 19. As the previous run end was 12, the even logic path is followed. The run length of 19 - 12 = 7 is calculated and fed to draw logic

$$\frac{\text{run length} - 1}{2} = \frac{7 - 1}{2} = 3 \text{ white pixels are drawn}$$

Finally, I3 logic is followed to find the next or last run end 20. As the previous run end was 19 or odd, the logic path for odd run end is followed. The run length is calculated as 20 - 19 = 1 and fed to the draw logic

$$\frac{\text{run length} + 2}{2} = \frac{1 + 2}{2} = 1 \text{ black pixel}$$

Consequently, the following image line is drawn in a single process:

$$1 \ 1 \ 1 \ 1 \ 1 \ 1 \ 0 \ 0 \ 0 \ 1$$

rather than in two stages as required by the prior art.

When the last run end for the first line has been processed, the logic circuitry shown in Figure 1B becomes active to process the second line of run end encoded data and combine it with the first decompressed and resolution modified line. Let us assume the following run end encoded line for the second line:

```
26

00      00      00

00      03      08      09      12      17      20

20      20
```

For a new line, it is assumed the first run end, 0, is white and the previous run end was even (20). The run length of 0 - 0 is calculated and

$$\frac{\text{run length}}{2} = \frac{0}{2} = 0$$

pixels are OR'ed with 0 pixels in the first line.

Next, I5 is followed to obtain the next run end of 3. As the previous run end was even (0), the run length of 3 - 0 = 3 is determined and

$$\frac{\text{run length} + 1}{2} = \frac{3 + 1}{2} = 2$$

is OR'ed with the first two pixels of the first line. As the pixels in both lines are black, the result is 2 black pixels.

Next, I6 is followed to obtain the next run end of 8. As the previous run end of 3 is odd, the run length of 8 - 3 = 5 is determined and

$$\frac{\text{run length}}{2} = \frac{5}{2} = 2$$

white pixels are OR'ed with the next two pixels of line 1. As the two pixels of line 1 are black, 2 more black pixels are generated.

I5 is now followed and the next run end of 9 is obtained. The previous even run end 8 is subtracted from 9 to provide a run length of 1.

$$\frac{\text{run length} + 1}{2} = \frac{1 + 1}{2} = 1$$

black pixel is OR'ed with the next pixel of line 1 to provide 1 more black pixel.

I6 now returns to the next run end 12 which is calculated as a run length of 12 - 9 = 3. The odd path is followed and

$$\frac{\text{run length} - 1}{2} = \frac{3 - 1}{2} = 1$$

is calculated to provide 1 white pixel in line 2 which is OR'ed with the sixth pixel in line 1, which is a black pixel, to provide another black pixel.

I5 enables detection of the next run end of 17. As the previous run end (12) was even, the run length of 17 - 12 = 5 is calculated and

$$\frac{\text{run length} + 1}{2} = \frac{5 + 1}{2} = 3$$

black pixels are OR'ed with the next three pixels of line 1 to provide three more black pixels.

I6 returns the flow to the next and last run end of 20. This provides a run length of 20 - 17 = 3 for a run length. For an odd previous run end

$$\frac{\text{run length} - 1}{2} = \frac{3 - 1}{2} = 1$$

is calculated and a single white pixel is OR'ed with the last pixel of line 1 to provide one more black pixel.

As a result, the decompression and resolution of the two run length encoded lines provides the following ten bit decompressed and resolution modified line:

$$1 \quad 1 \quad 1 \quad 1 \quad 1 \quad 1 \quad 1 \quad 1 \quad 1 \quad 1$$

We will now describe a specific example illustrating how the present invention works. In this example, each line of compressed image data is stored in a run end buffer. Specific buffers may be provided for storing the data or the data may be stored in a central memory in a manner that is well known to those skilled in the art of data management of computing systems.

In this example, each line is stored in a run end buffer as a series of numbers. The first number defines the length count of the compressed representation of the image or the length count of the run end. The second series of numbers is three zeros. These three zeros uniquely identify the start of a string of data representing the image. The next series of numbers is the data representing the image and the last two numbers are copies of the last number of the data portion of the run end. This is an accepted standard method of storing run end encoded compressed data, however, clearly other techniques could be used to enable isolation and identification of the compressed data in a manner that would facilitate decompression. Such techniques are not a part of the present invention and will not be further discussed herein. If one has an interest in run end encoding one may refer to U.S. Patent 4,783,834 assigned to IBM Corp.

We will now proceed through the decompression and modification process for an example compressed image. In this example, six lines are stored in run end buffers as follows:

Line 1

36                                                                           (length)

00  00  00                                                                   (3 zeros)

00  10  27  28  32  51  60  65  80  81  95  96                               (data)

96  96                                                                       (2 copies of

last run end)

Line 2

36                                                                           (length)

00  00  00                                                                   (3 zeros)

00  10  27  28  32  51  60  65  80  81  95  96                               (data)

96  96                                                                       (2 copies of

last run end)

Line 3

| 16 | (length) |
| 00  00  00 | (3 zeros) |
| 96  96 | (data) |
| 96  96 | (2 copies of last run end) |

Line 4

| 16 | (length) |
| 00  00  00 | (3 zeros) |
| 96  96 | (data) |
| 96  96 | (2 copies of last run end) |

Line 5

| 52 | (length) |
| 00 00 00 | (3 zeros) |
| 00 01 02 03 08 09 10 11 12 28 31 32 58 65 73 78 93 94 96 96 | (data) |
| 96 96 | (2 copies of last run end) |

Line 6

| 52 | (length) |
| 00 00 00 | (3 zeros) |
| 00 01 02 03 08 09 10 11 12 28 31 32 58 65 73 78 93 94 96 96 | (data) |
| 96 96 | (2 copies of last run end) |

For a 2:1 resolution modification of an image, the following four formulas may be used to compress the image horizontally.

1. where you are decoding a black run of the image and the previous white run end was an even number the decoding black is determined by:

$$\underline{\text{run length} + 1} \qquad\qquad (A)$$
$$2$$

where rlen = current run end value - previous run end value

8

2. where you are decoding a black run of the image and the previous white run end was an odd number the decoded black is determined by:

$$\frac{rlen + 2}{2} \qquad (B)$$

3. where you are decoding a white run of the image and the previous black run end was an even number the decoded white is determined by:

$$\frac{rlen}{2} \qquad (C)$$

4. where you are decoding a white run of the image and the previous black run end was an odd number the decoded white is determined by:

$$\frac{rlen - 1}{2} \qquad (D)$$

The above formulae are given as exemplary and are not to be interpreted as limiting of the invention. Other formula for decoding run end encoded images could be alternatively used. However, it has been Applicant's experience that the above formulae provide the best reconstruction of the compressed black and white image.

If we now return to our example of run end encoded data and apply our process for decompressing and modifying the data the advantages of the present invention will be more readily apparent.

In this example, we will use a value of 0 to represent a white portion of the image and a 1 to represent a black portion of the image.

Now let us apply the decompression algorithm to the first run end buffer. In the present invention it is assumed that the first run end count always represents the white colour. In the current example, we have also assumed that a black run end count ended the previous run length and was an even number. On this basis the run length for the first run end number is:

$$rlen = current\ run\ end\ value - previous\ run\ end\ value$$

$$= 0 - 0 = 0$$

As this run length ends evenly we use formula (C):

$$\frac{rlen}{2} = \frac{0}{2} = 0$$

The output for the first run length number is nothing.

The next run length number for the first black part of the image is 10. Because the previous white run end was even (0), the formula A is selected for calculating the image representation:

```
rlen = current run end value - previous run end value
     = 10 - 0 = 10
```

$$\frac{rlen + 1}{2} = \frac{10 + 1}{2} = 5$$

The output for the black run end is five binary 1's "11111".

The next run end for white is 27. As the previous black run end was 10 which is an even number we select formula (C):

```
rlen = current run end value - previous run end value
     = 27 - 10 = 17
```

$$\frac{rlen}{2} = \frac{17}{2} = 8$$

The output image data now has eight binary 0's added to it. The line so far is "1111 1000 0000 0".

The next run end for black is 28. As the previous white run end ended oddly, we select the formula (B):

```
rlen = current run end value - previous run end value
     = 28 - 27 = 1
```

$$\frac{rlen + 2}{2} = \frac{1 + 2}{2} = 1$$

A single binary 1 is added to the decompressed data stream to provide a line "1111 1000 0000 01'.

The process continues for all the run ends on the line as follows:

rlen = 32 - 28 = 4

$$\frac{rlen}{2} = \frac{4}{2} = 2 \qquad\qquad (C)$$

The data output is "1111 1000 0000 0100"

rlen = 51 - 32 = 19

$$\frac{rlen + 1}{2} = \frac{19 + 1}{2} = 10 \qquad\qquad (A)$$

10

The data output is "1111 1000 0000 0100 1111 1111 11"

rlen = 60 - 51 = 9

$$\frac{rlen - 1}{2} = \frac{9 - 1}{2} = 4 \qquad\qquad (D)$$

The data output is "1111 1000 0000 0100 1111 1111 1100 00"

rlen = 65 - 60 = 5

$$\frac{rlen + 1}{2} = \frac{5 + 1}{2} = 3 \qquad\qquad (B)$$

The data output is now:
"1111 1000 0000 0100 1111 1111 1100 0011 1"

rlen = 80 - 65 = 15

$$\frac{rlen - 1}{2} = \frac{15 - 1}{2} = 7 \qquad\qquad (D)$$

The data output is now:
"1111 1000 0000 0100 1111 1111 1100 0011 1000 0000"

rlen = 81 - 80 = 1

$$\frac{rlen + 2}{2} = \frac{1 + 1}{2} = 1 \qquad\qquad (B)$$

The data output is now:
"1111 1000 0000 0100 1111 1111 1100 0011 1000 0000 1"

rlen = 95 - 81 = 14

$$\frac{rlen - 1}{2} = \frac{14 - 1}{2} = 6 \qquad\qquad (C)$$

The data output is now:
"1111 1000 0000 0100 1111 1111 1100 0011 1000 0000 1000 000"
Finally -

rlen = 96 - 95 = 1

$$\underline{rlen + 2} \quad = \quad \underline{1 + 2} \quad = \quad 1 \qquad\qquad\qquad (A)$$
$$2 \qquad\qquad 2$$

The completed data line is hence represented as the following binary series:

1111 1000 0000 0100 1111 1111 1100 0011 1000 0000 1000 0001

As is evident, the run-end encoded data has not only been decompressed, it has also been modified so that the line is 48 bits long rather than 96 as it was when it was compressed. In this example, we have achieved a 2:1 horizontal reduction simultaneously with decompressing the image.

The next line in the second of the six run end buffers is then processed in the same manner. Run ends always start with the white colour for the first run length and we assume that the previous black run length ended evenly.

For the first run length -

rlen = 0 - 0 = 0

$$\underline{rlen} \quad = \quad \underline{0} \quad = \quad 0 \text{ (output is nothing)} \qquad\qquad (C)$$
$$2 \qquad\quad 2$$

Next -

$$rlen = current\ run\ end\ value\ -\ previous\ run\ end\ value$$
$$= 10 - 0 = 10$$
$$\underline{rlen + 1} \quad = \quad \underline{10 + 1} \quad = \quad 5 \qquad\qquad\qquad (A)$$
$$2 \qquad\qquad 2$$

binary output is: 1111 1

Next -

$$rlen = current\ run\ end\ value\ -\ previous\ run\ end\ value$$
$$= 27 - 10 \quad = \quad 17$$
$$\underline{rlen} \quad = \quad \underline{17} \quad = \quad 8 \qquad\qquad\qquad\qquad (C)$$
$$2 \qquad\quad 2$$

binary output is: 1111 1000 0000 0

Next -

$$rlen = current\ run\ end\ value\ -\ previous\ run\ end\ value$$
$$= 28 - 27 \quad = \quad 1$$
$$\underline{rlen + 2} \quad = \quad \underline{1 + 2} \quad = \quad 1 \qquad\qquad\qquad (B)$$
$$2 \qquad\qquad 2$$

binary output is: 1111 1000 0000 01

Next -

$$\text{rlen} = \text{current run end value} - \text{previous run end value}$$
$$= 32 - 28 = 4$$
$$\frac{\text{rlen}}{2} = \frac{4}{2} = 2 \qquad\qquad (D)$$

binary output is: 1111 1000 0000 0100

Next -

$$\text{rlen} = \text{current run end value} - \text{previous run end value}$$
$$= 51 - 32 = 19$$
$$\frac{\text{rlen} + 1}{2} = \frac{19 + 1}{2} = 10 \qquad\qquad (A)$$

binary output is: 1111 1000 0000 0100 1111 1111 11

Next -

$$\text{rlen} = \text{current run end value} - \text{previous run end value}$$
$$= 60 - 51 = 9$$
$$\frac{\text{rlen} - 1}{2} = \frac{9 - 1}{2} = 4 \qquad\qquad (D)$$

binary output is: 1111 1000 0000 0101 1111 1111 1100 00

Next -

$$\text{rlen} = \text{current run end value} - \text{previous run end value}$$
$$= 65 - 60 = 5$$

$$\frac{\text{rlen} + 2}{2} = \frac{5 + 2}{2} = 3 \qquad\qquad (B)$$

binary output is: 1111 1000 0000 0101 1111 1111 1100 0011 1

Next -

$$\text{rlen} = \text{current run end value} - \text{previous run end value}$$
$$= 80 - 65 = 15$$
$$\frac{\text{rlen} - 1}{2} = \frac{15 - 1}{2} = 7 \qquad\qquad (D)$$

binary output is:
1111 1000 0000 0101 1111 1111 1100 0011 1000 0000

13

Next -

$$rlen = current\ run\ end\ value - previous\ run\ end\ value$$

$$= 81 - 80 = 1$$

$$\frac{rlen + 1}{2} = \frac{1 + 1}{2} = 1 \qquad (B)$$

binary output is:
1111 1000 0000 0101 1111 1111 1100 0011 0000 0000 1
Next -

$$rlen = current\ run\ end\ value - previous\ run\ end\ value$$

$$= 95 - 81 = 14$$

$$\frac{rlen - 1}{2} = \frac{14 - 1}{2} = 6 \qquad (D)$$

binary output is:
1111 1000 0000 0101 1111 1111 1100 0011 0000 0000 1000 000
Finally -

$$rlen = current\ run\ end\ value - previous\ run\ end\ value$$

$$= 96 - 95 = 1$$

$$\frac{rlen + 2}{2} = \frac{1 + 2}{2} = 1 \qquad (A)$$

binary output is:

1111 1000 0000 0101 1111 1111 1100 0011 0000 0000 1000 0001

After the two lines are decompressed and modified in the horizontal direction, the lines are immediately subjected to a 2:1 vertical modification. To preserve the black data each line is ORed. If it is desired to preserve the white data then the two lines would be ANDed together. In the present example we are using the OR function to preserve the black data.

To reiterate, decompressing the first two lines provided the following binary output:

Line 1

1111 1000 0000 0100 1111 1111 1100 0011 1000 0000 1000 0001

Line 2

1111 1000 0000 0100 1111 1111 1100 0011 0000 0000 1000 0001

When these two lines are ORed the result is the following line:

14

1111 1000 0000 0100 1111 1111 1100 0011 1000 0000 1000 0001

This provides a single line of 48 bits from the original two lines of 96 bits or a 2:1 compression of the image both vertically and horizontally. The process of decompressing two lines of the image and ORing or ANDing the two lines together to obtain a reduced resolution image is continued until all lines of the image have been decompressed and modified. The most important aspect to note is that the modification of each pair of lines of image data is performed immediately upon decompression of the data and is not held over until the entire image is decompressed. This reduces the storage buffer space required to store the image as only one-half the number of lines plus one must be stored at any one time in decompressed form and the resolution modification is performed much more quickly as additional transfer cycles are not needed to hold and transfer the decompressed image for subsequent processing as it is processed immediately.

In the example shown, when all six lines are decompressed and the first and second, third and fourth, and fifth and sixth lines are ORed together the following three lines of binary code would result:

1111 1000 0000 0100 1111 1111 1100 0011 1000 0000 1000 0001

0000 0000 0000 0000 0000 0000 0000 0000 0000 0000 0000 0000

1100 1111 1111 1101 0000 0000 0000 0111 1000 1110 0000 0010

In this example, six 96 bit long lines of image data coded in run end encoded format have been reduced to three 48 bit long lines of decompressed image data in a single process that is substantially faster than the prior art processes which decompressed the run end encoded data into 96 bit long lines which were then subjected to horizontal and vertical modification to provide the requisite resolution.

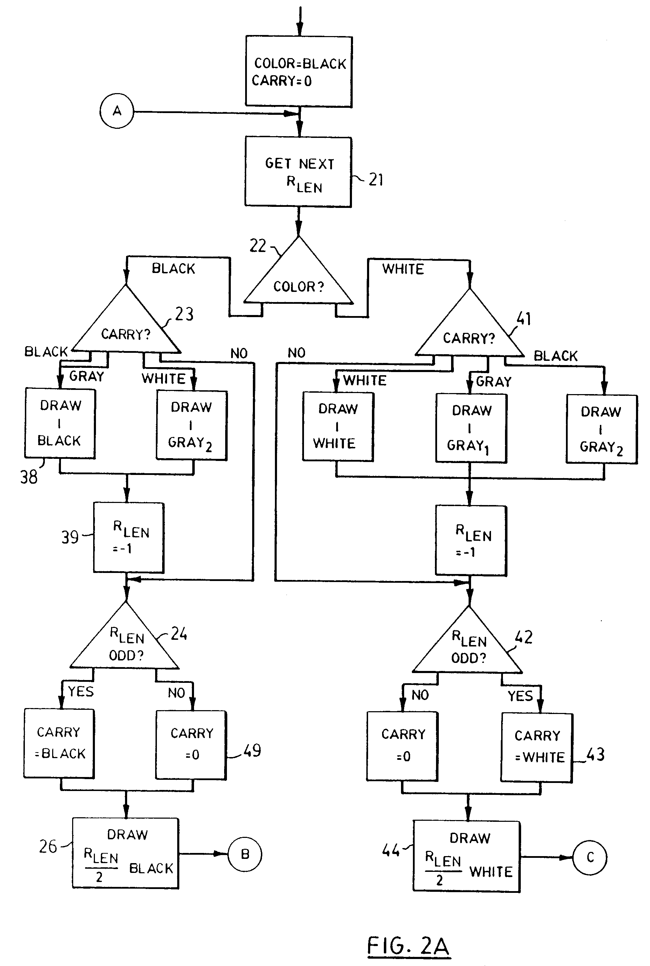

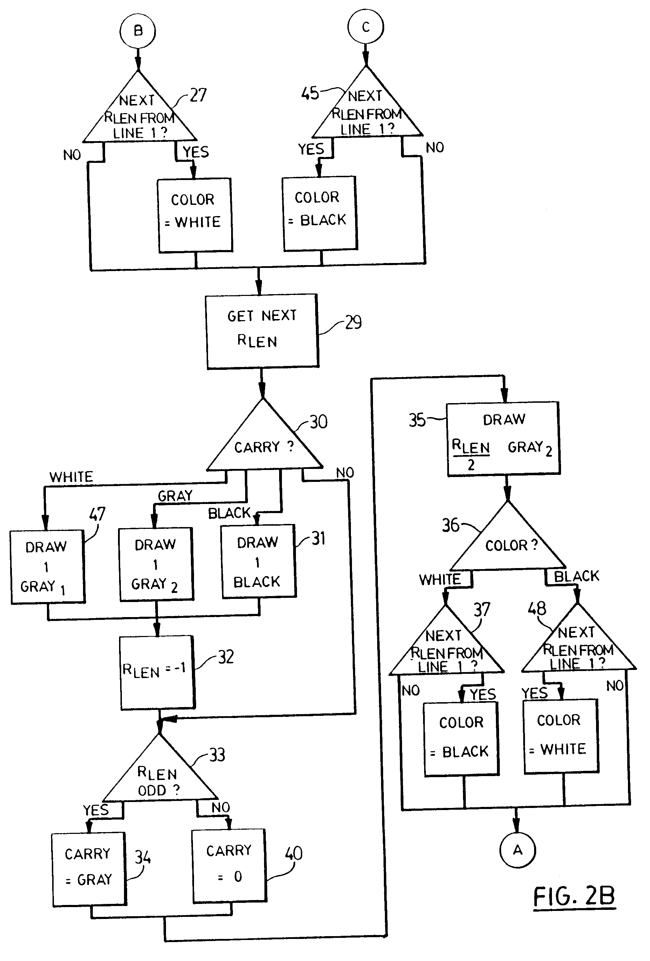

The invention is equally useful in decompressing and modifying the resolution of an image that contains limited grey scale. The process for handling grey scale is illustrated in Figure 2. In this limited grey processing it is necessary to process four adjacent bits to obtain the desired black, white or grey pixel representation. Therefore, it is necessary to process at least two lines of the compressed data simultaneously rather than in sequence as was done where only two colours were involved. The present example will demonstrate use of the invention to perform anti-aliasing, horizontal and vertical resolution modification in one simultaneous procedure directly from the run end compressed format data to provide an output image. The example will illustrate 2:1 horizontal and vertical resolution modification and 1:2 anti-aliasing. The 1:2 anti-aliasing converts bi-level data to a 4 level grey image. For this example, we have selected two short lines of compressed data to illustrate the invention. It will be obvious to those skilled in the art that the invention is equally applicable to image data of much greater complexity representing many lines and of much greater length. The two exemplary lines in the format used in the earlier illustrated example are:

Line 1

24                                                      (length)

00  00  00                                              (3 zeros)

00  05  07  12  19  20                                  (data)

20  20                                                  (2 copies of

                                                        last run end)


Line 2

20                                                      (length)

00  00  00                                              (3 zeros)

00  09  13  20                                          (data)

20  20                                                  (2 copies of

                                                        last run end)


To decompress, modify and anti-alias these lines in accordance with the prior art, each line would be fully decoded as follows:

$$1111\ 1001\ 1111\ 0000\ 0001$$

$$1111\ 1111\ 1000\ 0111\ 1111$$

Then each group of four bits would be examined to determine the number of black pixels in each group of four bits to obtain the 4 levels of grey.

The current example would reduce as follows:

```
1 1 1 1   1 0 0 1   1 1 1 1   0 0 0 0   0 0 0 1

1 1 1 1   1 1 1 1   1 0 0 0   0 1 1 1   1 1 1 1

 \/   \/   \/   \/   \/   \/   \/   \/   \/   \/

 3    3    3    3    3    2    1    2    2    3
```

where the two bit grey pixel can be of 0, 1, 2 or 3 intensity where 0 is white and 3 is black, 1 is light grey and 2 is dark grey. In this example, 4 black pixels is rounded to an intensity of 3.

In accordance with our invention, the need to reduce each line to its bit string before converting the bit stream to its grey level intensity is eliminated. The run end data can be directly converted to the desired output.

For the above two lines of code, our invention would parse the lines in the manner described hereinafter.

As illustrated in Figure 2, the resolution process is started with the assumptions that the previous run end was white and there were no carries from the processing.

The next step is to find the lowest or next run end that has not been used as shown at 21 in Figure 2. In the present example the next run end is 5 on line 1. The colour of the run end is determined at the decision block 22. Here the colour is black and the flow is to decision block 23 which indicates no carry and provides

16

an input directly to decision block 24. As the run length is 5, block 24 provides a yes output to block 25 which provides an output indicating a black carry. An output of the value of the run end is fed to block 26 which draws the number of black pixels determined by

$$\underline{\text{run length}} = \underline{5} = 2$$
$$\phantom{\text{run length}}\;2\qquad\;2$$

black pixels or an output of grey intensity three 3's with a carry of 1 black.

An output from block 26 activates decision block 27 to find the next run length end and determine whether the next run length end was found in the first or second line. In the present example, the next run length end is found at the seventh bit position in the first line. As this is in the same line, it represents a change in colour as indicated at block 28. The next run length is provided at block 29. The carry information from the previous run end sequence is provided to decision block 30. As the run length end of 5 provided 1 black carry, the output of 1 black pixel is provided by block 31 and the run length is reduced by 1 at block 32. Decision block 33 now provides an output in accordance with the run length. As the run length is 7 - 5 - 1 = 1, which is odd, the carry grey box is activated to provide 1 grey carry. Next, block 35 determines how many grey$_2$ pixels to draw by dividing the run length by 2. As the run length is 1, no grey$_2$ pixels are drawn.

Decision block 36 responds to the colour of the previous run length. In the present example, the last run length processed was white in line 1. At block 37, the next run end in either line is sought. In the present example, the next run end is found at 9 in the second line. Block 37 then activates block 21 over line A. At block 21, the next run length is 9 - 7 = 2 and the colour is black. Decision block 22 provides an output to decision block 23. As there was a grey carry from the processing of run end 7, an output is provided from block 23 to block 38 which draws 1 black pixel output. At this point the output of our example is four black pixels indicated as follows: 3 3 3 3

At block 39, the run length is reduced by 1. In the present example, this leaves a run length of 9 - 7 - 1 = 1. As this run length is now odd, decision block 24 provides an input to block 25 which provides a black carry. Block 26 determines the number of black pixels to be drawn as zero as the run length divided by 2 is 1/2.

The process follows through decision block 27 where the location of the next run end is sought. This time it is on line 1. The colour is indicated as white at block 28. At block 29, the next run length is determined. As the run end is 12, the run length is 12 - 9 = 3. Decision block 30 provides an output to block 31 since there was a black carry from the processing of the previous run end of 9 and the run length of 3 is reduced by 1 at block 32. The run length is now even and, therefore, no carry is generated at block 40. At block 35, a determination of grey$_2$ is made where

$$\underline{\text{run length}} = \underline{2} = 1$$
$$\phantom{\text{run length}}\;2\qquad\;2$$

The output is now as follows: 3 3 3 3 3 2 with no carry and the next colour white.

Block 36 now indicates the colour white as was determined at block 28 and decision block 37 now looks for the next run length end. In the present example, this is 13 in line 2. The output on line A now activates box 21 to determine the next run length which is 13 - 12 = 1. The colour is determined at decision block 22. As the colour is now white an output is provided to decision box 41. Box 41 provides an output directly to decision box 42 as there was no carry from the previous run length processing. As the run length of 13 - 12 = 1 is odd a white carry is provided by box 43 but no white output is provided by box 44 as

$$\underline{\text{run length}} = \underline{1}\ \text{is less than 1}$$
$$\phantom{\text{run length}}\;2\qquad\;2$$

Therefore, the output remains 3 3 3 3 3 2 but with a carry of 1 white and a next colour of grey.

The output of box 44 activates decision box 45 to seek the next run length end. In the present example, the next run length end is 19 in line 1. Therefore, box 45 provides an input to block 46 to indicate a colour of black. Block 29 then determines the run length. The run length in this example is 19 - 13 = 6. As there was a white carry from box 43, box 30 provides an input to box 47 which now provides a $grey_1$ output. The data output at this stage is now: 3 3 3 3 3 2 1.

Box 32 now reduces the run length by 1 to provide a run length of 6 - 1 = 5. As this run length is now odd, box 33 activates box 34 to provide a grey carry. At box 35, the number of $grey_2$ pixels to draw is determined by

$$\underline{\text{run length}} = \underline{5} = 2 \text{ pixels}$$
$$2 \qquad\qquad 2$$

The output of pixels is now: 3 3 3 3 3 2 1 2 2

The next colour is black and the carry is 1 grey.

Block 36 selects the black colour and activates decision block 48. The next run end is found at 20 on line 1 so the no output of block 48 is followed over A to box 21. Box 21 gets the next run length of 20 - 19 = 1. The colour black is selected at block 22 and as the carry at 23 is grey an input is provided from block 23 to activate block 38 to draw another black pixel. This provides an output of:

3 3 3 3 3 2 1 2 2 3

The run length is reduced by 1 at block 39 to provide a run length of 1 - 1 = 0 which provides no carry at block 49 and no black pixels at block 26.

This completes the present example and provides the grey scale output of the two lines of data as:

3 3 3 3 3 2 1 2 2 3

This is the same as is provided by the prior art method, however, the need to decompress each line of data has been eliminated.

There are two further points that should be noted. Carries occur when the division by 2 of the next run length does not go evenly. The colour of each run end is determined by selecting every second run end as grey and the intervening run ends are black or white to match the colour of the individual line at that point.

## Claims

1. A method for decompressing and modifying compressed data representing an image comprising the steps of:
   a) decompressing and modifying a predetermined portion of said compressed image data to form a first displayable portion of said data; and
   b) repeating said step a) with additional predetermined portions of said compressed image data to form additional displayable portions of said data whereby the combination of all said displayable portions provides a decompressed and modified displayable representation of said image.

2. A method as defined in Claim 1 wherein said compressed image data is partially decoded into a run length encoded format.

3. A method as defined in Claim 2 wherein said predetermined portion is two lines of said run length encoded format data and said two lines are combined to form a single line of said modified displayable representation.

4. A method as defined in Claim 3 wherein said image data represents a foreground and background colour elements and said two lines are combined by ORing together said foreground colour elements on said two lines.

5. A method as defined in Claim 3 wherein said image data represents a bilevel image and said two lines are combined in accordance with an anti-aliasing algorithm to produce a grey image.

18

FIG. 1A

FIG. 1B

FIG. 2A

21

FIG. 2B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | IBM TECHNICAL DISCLOSURE BULLETIN vol. 31, no. 6, November 1988, NEW YORK, USA pages 324 - 327 'SYSTEM FOR CONVERTING RESOLUTION' | 1-3 | H04N1/40 |
| A | * the whole document * | 4,5 | |
| Y | EP-A-0 149 121 (IBM) | 1-3 | |
| A | * abstract; claim 1; figures 1-4 * | 4,5 | |
| D,A | US-A-4 791 680 (YOKOE ET AL.) * abstract; figures 1-10 * | 1-3 | |
| D,A | US-A-4 628 534 (MARSHALL) | 1 | |
| D,A | EP-A-0 389 743 (IBM) * abstract; figures 1-9 * * abstract; figures 1-9 * | 1 | |

-----

| | | | TECHNICAL FIELDS SEARCHED (Int. Cl.5 ) |
|---|---|---|---|
| | | | H04N G06F |

The present search report has been drawn up for all claims

| Place of search | Date of completion of the search | Examiner |
|---|---|---|
| THE HAGUE | 19 APRIL 1993 | KASSOW H. |